# EUROPEAN PATENT SPECIFICATION

(11) **EP 3 854 857 B1**
(45) Date of publication and mention of the grant of the patent: **19.06.2024**
(21) Application number: 19881533.4
(22) Date of filing: 05.11.2019
(51) Int. Cl.: C08G 18/12, C08G 18/28, C08G 18/32, C08G 18/10, C08G 18/66, C09D 175/06, C09D 175/08, C08G 18/42, C08G 18/44, C08G 18/50, C08G 18/75, C08G 18/76, C08G 18/48, C08G 71/04

(54) **ORGANIC POLYMER, COMPOSITION CONTAINING SAME AND METHOD FOR PRODUCING SAME**
ORGANISCHES POLYMER, DIESES ENTHALTENDE ZUSAMMENSETZUNG UND VERFAHREN ZU DEREN HERSTELLUNG
POLYMÈRE ORGANIQUE, COMPOSITION LE CONTENANT ET SON PROCÉDÉ DE PRODUCTION

(30) Priority: 06.11.2018 JP 2018208908
(43) Date of publication of application: 28.07.2021
(73) Proprietor: DIC Corporation, Tokyo 174-8520 (JP)
(72) Inventor: SATAKE, Naoto, Takaishi-shi, Osaka 592-0001 (JP); NAGAHAMA, Sadamu, Takaishi-shi, Osaka 592-0001 (JP)
(74) Representative: Schön, Christoph
(86) International application number: PCT/JP2019/043210
(87) International publication number: WO 2020/095877

(56) References cited:
- WO-A1-2012/161215
- WO-A1-2017/059011
- WO-A1-2018/011504
- JP-A- 2008 001 789
- JP-A- 2008 291 143
- JP-A- 2009 173 919
- JP-A- 2010 126 565
- JP-A- 2017 014 413
- JP-A- 2017 222 760
- US-B1- 6 211 286

## Description

### Technical Field

The present invention relates to an organic polymer, and a composition containing the same.

### Background Art

Mechanical strength, flexibility, and chemical resistance of urethane resins can be adjusted in accordance with raw materials used, and urethane resins are used for various industrial applications such as building members, home electric appliances, automobile components, automobile exterior materials, coating agents, adhesives, and medical instruments. In recent years, introduction of a hydroxy group into a urethane resin has been attempted (refer to, for example, PTL 1).
JP 2008 001789 A discloses a curable resin composition comprising a compound having a five-membered ring carbonate group in the molecule, a compound having an epoxy group in the molecule and a compound having a primary amino group in the molecule.
US 6 211 286 B1 discloses aqueous binders for soft feel materials, comprising predominantly aliphatic, water-soluble or water-dispersible polymers having terminal or lateral cyclic carbonate groups and an amine having at least two primary amino groups, the ratio of the number of primary amino groups in the amine to the number of cyclic carbonate groups in the water-soluble or water-dispersible polymers being from 7:3 to 3:7.
WO 2017/059011 A1 discloses polyurethane adhesive layers for electro-optic assemblies, wherein dimethylolpropionic acid is used as a low-molecular-weight polyol.
JP 2008 291143 A discloses an aqueous urethane resin produced by reacting, an aromatic and/or araliphatic polyisocyanate, a polyol, and a compound having both a hydrophilic group and an active hydrogen group to prepare a isocyanate group-terminated prepolymer, reacting the resultant isocyanate group-terminated prepolymer with a cyclic carbonate having an active hydrogen group to prepare a cyclic carbonate-terminated prepolymer, and then reacting the resultant cyclic carbonate-terminated prepolymer with a polyamine in water.
WO 2018/011504 A1 discloses an adhesive dual-component composition comprising a first composition based on a polyurethane prepolymer with cyclocarbonate terminations and a second composition based on a mixture comprising at least one diamine comprising only two primary amine groups of the -CH₂-NH₂ type and at least one polyamine comprising at least three primary amine groups of the -CH₂-NH₂ type.

### Citation List

### Patent Literature

PTL 1: Japanese Unexamined Patent Application Publication No. 2000-319504

### Summary of Invention

### Technical Problem

Regarding a known urethane resin having a hydroxy group, resistance to peeling from a metal base material may be insufficient.

### Solution to Problem

An organic polymer according to the present invention is defined in appended claim 1.

### Advantageous Effects of Invention

A coating film formed of the composition containing the organic polymer according to the present invention has favorable resistance to peeling from a metal base material.

### Description of Embodiments

An organic polymer according to the present invention is defined in appended claim 1 and is a reaction product of Reaction product (I) of Urethane prepolymer (A) having an isocyanate group and Compound (B) denoted by Formula (1) and Polyamine compound (II).

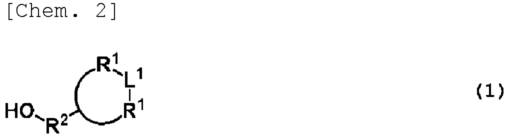

[In Formula (1),
each R¹ represents a single bond or a hydrocarbon group having a carbon atom number of 1 to 10,
R² represents a hydrocarbon group having a carbon atom number of 1 to 50 where -CH₂- contained in the hydrocarbon group is replaced or not replaced by -O-, and
L¹ represents -O-CO-O-.]

Urethane prepolymer (A) is a reaction product of Polyol (a1) and Polyisocyanate (a2), and Polyol (a1) contains High-molecular-weight polyol (a1-1) and Low-molecular-weight polyol (a1-2).

High-molecular-weight polyol (a1-1) represents a polyol having a weight average molecular weight of 500 or more, and the weight average molecular weight of High-molecular-weight polyol (a1-1) is preferably 700 or more and more preferably 800 or more and preferably 500,000 or less, more preferably 300,000 or less, further preferably 100,000 or less, still more preferably 50,000 or less, and particularly preferably 10,000 or less.

In the present specification, the weight average molecular weight and the number average molecular weight can be measured as a converted value on the basis of polystyrene standard samples by using gel permeation chromatography.

The number of hydroxy groups included in High-molecular-weight polyol (a1-1) is 2 or more and preferably 10 or less, more preferably 6 or less, and further preferably 4 or less.

At least one type of High-molecular-weight polyol (a1-1) is used, and examples include polyether polyols, polyester polyols, polycarbonate polyols, and polyolefin polyols. Preferable examples include polyester polyols and polycarbonate polyols.

Examples of the polyether polyols include addition polymerization (ring-opening polymerization) products of alkylene oxide by using, as the situation demands, at least one compound having at least two active hydrogen atoms as an initiator.

Examples of the initiator include straight-chain diols such as ethylene glycol, diethylene glycol, triethylene glycol, trimethylene glycol, 1,2-propanediol, 1,3-propanediol, 1,3-butanediol, 1,4-butanediol, and 1,6-hexanediol; branched chain diols such as neopentyl glycol; triols such as glycerin, trimethylolethane, trimethylolpropane, and pyrogallol; polyols such as sorbitol, sucrose, and aconite sugar; tricarboxylic acids such as aconitic acid, trimellitic acid, and hemimellitic acid; phosphoric acid; polyamines such as ethylene diamine and diethylene triamine; triisopropanol amine; phenolic acids such as dihydroxybenzoic acid and hydroxyphthalic acid; and 1,2,3-propanetrithiol.

Examples of the alkylene oxides include ethylene oxide, propylene oxide, butylene oxide, styrene oxide, epichlorohydrin, and tetrahydrofuran.

Regarding the polyether polyols, it is preferable that polyoxytetramethylene glycol produced by subjecting tetrahydrofuran to addition polymerization (ring-opening polymerization) with the above-described initiator be used.

Examples of the polyester polyols include polyester polyols produced by subjecting a polyol having a molecular weight of 50 or more and 300 or less and a polycarboxylic acid to an esterification reaction; polyester polyols produced by subjecting a cyclic ester compound such as ε-caprolactone to ring-opening polymerization; and polyester polyols produced by copolymerization of these.

At least one type of the polyol having a molecular weight of 50 or more and 300 or less may be used, and examples include aliphatic polyols having a carbon atom number of 2 or more and 6 or less such as ethylene glycol, propylene glycol, 1,4-butanediol, 1,5-pentanediol, 1,6-hexanediol, 3-methyl-1,5-pentanediol, diethylene glycol, dipropylene glycol, neopentyl glycol, and 1,3-butanediol; polyols having an alicyclic structure such as 1,4-cyclohexanediol and cyclohexanedimethanol; and polyols having an aromatic structure such as bisphenol compounds, for example, bisphenol A and bisphenol F, and alkylene oxide adducts thereof.

Examples of the polycarboxylic acids include aliphatic polycarboxylic acids such as succinic acid, adipic acid, sebacic acid, and dodecane dicarboxylic acid; aromatic polycarboxylic acids such as terephthalic acid, isophthalic acid, phthalic acid, and naphthalene dicarboxylic acid; and anhydrides or ester-forming derivatives of the above-described aliphatic polycarboxylic acids and aromatic polycarboxylic acids.

Examples of the polycarbonate polyols include reaction products of carbonate esters and polyols; and reaction products of phosgene and bisphenol A.

Examples of the carbonate esters include methyl carbonate, dimethyl carbonate, ethyl carbonate, diethyl carbonate, cyclocarbonate, and diphenyl carbonate.

Examples of polyols capable of reacting with the carbonic esters include polyols described above as examples of the low-molecular-weight polyol; and high-molecular-weight polyols (weight average molecular weight of 500 or more and 5,000 or less) such as polyether polyols (polyethylene glycols, polypropylene glycols) and polyester polyols (polyhexamethylene adipates).

Examples of the polyolefin polyols include polyisobutene polyols, hydrogenated polybutadiene polyols, and hydrogenated polyisoprene polyols.

High-molecular-weight polyol (a1-1) above may contain high-molecular-weight polyols other than polyether polyols, polyester polyols, polycarbonate polyols, and polyolefin polyols.

The total content of polyether polyols, polyester polyols, polycarbonate polyols, and polyolefin polyols (preferably, polyether polyols, polyester polyols, and polycarbonate polyols) contained in High-molecular-weight polyol (a1-1) is preferably 30% by mass or more and more preferably 40% by mass or more and 100% by mass or less in High-molecular-weight polyol (a1-1).

The content of High-molecular-weight polyol (a1-1) in Polyol (a1) is preferably 70% by mass or more, more preferably 80% by mass or more, and further preferably 85% by mass or more and preferably 98% by mass or less, more preferably 95% by mass or less, and further preferably 90% by mass or less.

Low-molecular-weight polyol (a1-2) above represents a polyol having a molecular weight of 300 or less.

In the present specification, regarding the molecular weight of Low-molecular-weight polyol (a1-2), the value of the chemical formula weight calculated on the basis of the molecular formula of Low-molecular-weight polyol (a1-2) is used.

The number of hydroxy groups included in Low-molecular-weight polyol (a1-2) is 2 or more and preferably 10 or less, more preferably 6 or less, and further preferably 4 or less.

At least one type of Low-molecular-weight polyol (a1-2) is used, and examples include straight-chain or branched-chain alkylenediols such as ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, 1,6-hexanediol, and cyclohexane dimethanol.

The content of the alkylenediol in Low-molecular-weight polyol (a1-2) is 60% by mass or more, preferably 70% by mass or more, and is 100% by mass or less.

The content of Low-molecular-weight polyol (a1-2) relative to 100 parts by mass of High-molecular-weight polyol (a1-1) is preferably 1 part by mass or more, more preferably 2 parts by mass or more, and further preferably 4 parts by mass or more and preferably 30 parts by mass or less, more preferably 20 parts by mass or less, and further preferably 15 parts by mass or less.

High-molecular-weight polyol (a1-1) may have an acid group such as a carboxy group or a sulfonic acid group; or a basic group such as a substituted or unsubstituted amino.

At least one type of Polyisocyanate (a2) is used, and examples include aromatic polyisocyanates such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, triene diisocyanate, naphthalene diisocyanate, xylylene diisocyanate, and tetramethylxylylene diisocyanate; aliphatic polyisocyanates such as hexamethylene diisocyanate and lysine diisocyanate; and polyisocyanates having an alicyclic structure (hereafter "having an alicyclic structure" may be simply referred to as "alicyclic") such as cyclohexane diisocyanate, hydrogenated xylylene diisocyanate, isophorone diisocyanate, and dicyclohexylmethane diisocyanate.

The molar ratio of isocyanate groups included in Polyisocyanate (a2) to hydroxy groups included in Polyol (a1) (NCO/OH) is preferably 0.9 or more and more preferably 0.95 or more and preferably 3 or less and more preferably 2 or less.

Urethane prepolymer (A) is produced by reacting Polyol (a1) with Polyisocyanate (a2). As the situation demands, a chain elongation reaction for further adding Chain elongation agent (a3) may be performed, and the addition product in which Chain elongation agent (a3) is further added to the reaction product of Polyol (a1) and Polyisocyanate (a2) is included in Urethane prepolymer (A) above.

At least one type of Chain elongation agent (a3) may be used, and examples include polyamine compounds, hydrazine compounds, and other active-hydrogen-atom containing compounds.

At least one type of the polyamine compound may be used, and examples include diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, and 1,4-cyclohexanediamine; N-hydroxymethylaminoethylamine, N-hydroxyethylaminoethylamine, N-hydroxypropylaminopropylamine, N-ethylaminoethylamine, and N-methylaminopropylamine; diethylenetriamine, dipropylenetriamine, triethylenetetramine; and polyoxyalkylenediamines (weight average molecular weight of 200 to 5,000) such as polyoxyethylenediamine, polyoxypropylenediamine, polyoxytetramethylenediamine, and polyoxyethylene-polyoxypropylenediamine.

At least one type of the hydrazine compound may be used, and examples include hydrazine, N,N'-dimethyl hydrazine, and 1,6-hexamethylene bishydrazine; succinic acid dihydrazide, adipic acid dihydrazide, glutaric acid dihydrazide, sebacic acid dihydrazide, and isophthalic acid dihydrazide; and β-semicarbazide propionic acid hydrazide.

At least one type of the other active-hydrogencontaining compound may be used. Examples include glycols such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; phenols such as bisphenol A, 4,4'-dihydroxydiphenyl, 4,4'-dihydroxydiphenyl ether, 4,4'-dihydroxydiphenyl sulfone, hydrogenated bisphenol A, and hydroquinone, and water and may also be used in a range in which the storage stability of the aqueous resin composition according to the present invention does not deteriorate.

The amount of Chain elongation agent (a3) relative to 100 parts by mass of Polyol (a1) is preferably 2 parts by mass or more, more preferably 3 parts by mass or more, and further preferably 5 parts by mass or more and preferably 30 parts by mass or less, more preferably 25 parts by mass or less, and further preferably 20 parts by mass or less.

The weight average molecular weight of Urethane prepolymer (A) is preferably 250 or more, more preferably 750 or more, and further preferably 1,000 or more and preferably 10,000 or less, more preferably 8,000 or less, and further preferably 5,000 or less.

In the case in which Polyol (a1), the polyisocyanate, and Chain elongation agent (a3) used as the situation demands are reacted, a reaction solvent may also be present.

At least one type of the reaction solvent may be used, and examples include ketone solvents such as acetone and methyl ethyl ketone; ether solvents such as tetrahydrofuran and dioxane; acetic acid ester solvents such as ethyl acetate and butyl acetate; nitrile solvents such as acetonitrile; and amide solvents such as dimethylformamide and N-methylpyrrolidone. A portion of or the entire reaction solvent may be removed by using, for example, a method of distillation under reduced pressure during the production process or after production of Urethane prepolymer (A).

During the above-described reaction, the reaction temperature may be set to be 50°C or higher and 150°C or lower.

Compound (B) above is denoted by Formula (1).

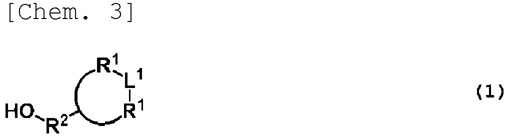

[In Formula (1),
each R¹ represents a single bond or a hydrocarbon group having a carbon atom number of 1 to 10,
R² represents a hydrocarbon group having a carbon atom number of 1 to 50 where -CH₂- contained in the hydrocarbon group may be replaced by -O-, and
L¹ represents -O-CO-O-.]

Preferably, the hydrocarbon group represented by R¹ is a straight-chain or branched-chain hydrocarbon group.

The carbon atom number of the hydrocarbon group represented by R¹ is preferably 1 to 5 and more preferably 1 to 3.

Preferably, the hydrocarbon group represented by R² is a straight-chain or branched-chain hydrocarbon group.

In this regard, the carbon atom number of the hydrocarbon group represented by R² is preferably 1 to 20, more preferably 1 to 5, and further preferably 1 to 3.

In the case in which -CH₂- included in the hydrocarbon group represented by R² is replaced by -O-, the replacing group is preferably the group denoted by the following formula. 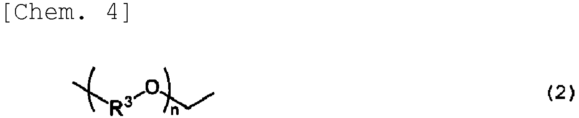 [In Formula (2), R³ represents an alkylene group having a carbon atom number of 1 to 8.]

The alkylene group represented by R³ may be either a straight chain or a branched chain, and examples include a methylene group, an ethylene group, a propylene group, a butylene group, and a pentandiyl group. The carbon atom number of the alkylene group represented by R³ is preferably 2 to 5 and more preferably 2 and 3.

Examples of Compound (B) above include compounds denoted by the following formulae. In the formulae, n represents an integer of 1 to 20.

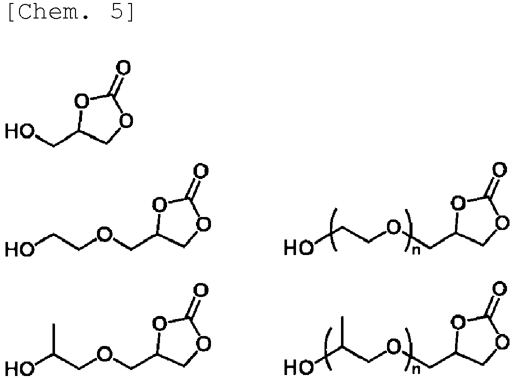

The amount of Compound (B) relative to 100 parts by mass of Urethane prepolymer (A) is preferably 2 parts by mass or more, more preferably 4 parts by mass or more, and further preferably 5 parts by mass or more and preferably 60 parts by mass or less, more preferably 50 parts by mass or less, and further preferably 40 parts by mass or less.

The weight average molecular weight of Reaction product (I) is preferably 400 or more, more preferably 500 or more, and further preferably 600 or more and preferably 20,000 or less, more preferably 10,000 or less, and further preferably 5,000 or less.

In the case in which Urethane prepolymer (A) and Compound (B) are reacted, a catalyst may also be present. Examples of the catalyst include amine catalysts such as triethylamine, tributylamine, diazabicycloundecene, triethylenediamine, pyridine, and hydroxypyridine; and organometallic catalysts such as tetrabutyltin and dibutyltin dilaurylate. The amount of the catalyst relative to 100 parts by mass of the total amount of Urethane prepolymer (A) and Compound (B) is preferably 0.001 parts by mass or more and 0.1 parts by mass or less.

In the case in which Urethane prepolymer (A) and Compound (B) are reacted, a reaction solvent may also be present. At least one type of the reaction solvent may be used, and examples include ketone solvents such as acetone and methyl ethyl ketone; ether solvents such as tetrahydrofuran and dioxane; acetic acid ester solvents such as ethyl acetate and butyl acetate; nitrile solvents such as acetonitrile; and amide solvents such as dimethylformamide and N-methylpyrrolidone. A portion of or the entire reaction solvent may be removed by using, for example, a method of distillation under reduced pressure during the production process or after production of Reaction product (I) .

The reaction temperature during the reaction of Urethane prepolymer (A) and Compound (B) is preferably 20°C to 140°C and more preferably 40°C to 80°C.

Polyamine compound (II) that reacts with Reaction product (I) is a compound having at least two substituted or unsubstituted amino groups (preferably unsubstituted amino groups). The number of amino groups (preferably unsubstituted amino groups) included in Polyamine compound (II) is preferably 2 or more and preferably 10 or less, more preferably 5 or less, and further preferably 3 or less.

The molecular weight of Polyamine compound (II) is preferably 100 or more and preferably 1,000 or less, more preferably 5,000 or less, and further preferably 2,000 or less.

Regarding the molecular weight of Polyamine compound (II), the value of the chemical formula weight calculated on the basis of the molecular formula of Polyamine compound (II) is used.

At least one types of Polyamine compound (II) is used, and examples include aliphatic polyamines such as ethylenediamine, 1,2-propanediamine, 1,3-propanediamine, 1,4-tetramethylenediamine, 1,6-hexamethylenediamine, 1,8-octamethylenediamine, 1,10-decamethylenediamine, 1,12-dodecamethylenediamine, N-ethylaminoethylamine, N-methylaminopropylamine, diethylenetriamine, dipropylenetriamine, and triethylenetetramine; alicyclic diamines such as isophoronediamine, norbornanediamine, 1,6-cyclohexanediamine, 4,4'-dicyclohexylmethanediamine, 3,3'-dimethyl-4,4'-dicyclohexylmethanediamine, and 1,4-cyclohexanediamine; diamines having a heterocyclic structure (hereafter "having a heterocyclic structure" may be simply referred to as "heterocyclic") such as piperazine, 2,5-dimethylpiperazine, and 2,5-diaminopyridine; aromatic polyamines such as phenylenediamine, tolylenediamine, and xylylenediamine; and aliphatic polyamines having a hydroxy group such as N-hydroxymethylaminoethylamine, N-hydroxyethylaminoethylamine, and N-hydroxypropylaminopropylamine.

The amount of Polyamine compound (II) relative to 100 parts by mass of Reaction product (I) is preferably 1 part by mass or more, more preferably 2 parts by mass or more, and further preferably 4 parts by mass or more and preferably 95 parts by mass or less, more preferably 90 parts by mass or less, and further preferably 85 parts by mass or less.

The weight average molecular weight of the organic polymer according to the present invention that is a reaction product of Reaction product (I) and Polyamine compound (II) is preferably 10,000 or more, more preferably 15,000 or more, and further preferably 20,000 or more and preferably 1,000,000 or less, more preferably 500,000 or less, and further preferably 200,000 or less.

The hydroxyl value of the organic polymer according to the present invention is preferably 5 mgKOH/g or more, more preferably 10 mgKOH/g or more, and further preferably 15 mgKOH/g or more and 250 mgKOH/g or less, more preferably 200 mgKOH/g or less, and further preferably 150 mgKOH/g or less.

In the present specification, the hydroxyl value can be measured by using a potassium hydroxide standard solution in conformity with JIS K 1557-1 (2007) A method.

In the case in which Reaction product (I) and Polyamine compound (II) are reacted, a reaction solvent may also be present. At least one type of the reaction solvent may be used, and examples include ketone solvents such as methyl ethyl ketone, methyl-n-propyl ketone, methyl isobutyl ketone, diethyl ketone, acetone, and cyclohexanone; ester solvents such as methyl formate, ethyl formate, propyl formate, methyl acetate, ethyl acetate, and butyl acetate; ether solvents such as tetrahydrofuran, dioxane, ethylene glycol monomethyl ether, ethylene glycol dimethyl ether, propylene glycol methyl ether, diethylene glycol monomethyl ether, and diethylene glycol dimethyl ether; aromatic solvents such as toluene and xylene; amide solvents such as dimethylformamide; dimethylsulfoxide; hydrocarbon halide solvents such as perchloroethylene and trichloroethylene; and alcohol solvents such as methanol, ethanol, propanol, butanol, ethylene glycol, and propylene glycol.

In the case in which Reaction product (I) and Polyamine compound (II) are reacted, a catalyst may also be present. Examples of the catalyst include the same catalysts as the catalysts that may also be present in the case in which Urethane prepolymer (A) and Compound (B) are reacted. Examples of the catalyst include amine catalysts such as undecene, triethylenediamine, pyridine, and hydroxypyridine; and organometallic catalysts such as tetrabutyltin and dibutyltin dilaurylate. The amount of the catalyst relative to 100 parts by mass of the total amount of Reaction product (I) and Polyamine compound (II) is preferably 0.01 parts by mass or more and 10 parts by mass or less.

The temperature during the reaction of Reaction product (I) and Polyamine compound (II) is preferably 40°C or higher and 200°C or lower, and the reaction time is preferably 4 hours or more and 24 hours or less.

A resin composition containing the organic polymer and an aqueous medium is defined in appended claim 3.

The content of the organic polymer in the resin composition is preferably 5% by mass or more and more preferably 10% by mass or more and preferably 80% by mass or less, more preferably 70% by mass or less, and further preferably 60% by mass or less.

Examples of the aqueous medium include water, hydrophilic organic solvents, and solvent mixtures of water and hydrophilic solvents. The hydrophilic solvent is preferably a solvent mixable with water and at least one type may be used. Examples include alcohol solvents such as methanol, ethanol, n-propanol, isopropyl alcohol, 1,2-propylene glycol, and 1,3-butylene glycol; ketone solvents such as acetone and methyl ethyl ketone; glycol ether solvents such as ethylene glycol-n-butyl ether, diethylene glycol-n-butyl ether, diethylene glycol monoethyl ether acetate, diethylene glycol dimethyl ether, propylene glycol methyl ether, dipropylene glycol methyl ether, dipropylene glycol dimethyl ether, dipropylene glycol-n-butyl ether, and tripropylene glycol methyl ether; lactam solvents such as N-methyl-2-pyrrolidone and N-ethyl-2-pyrrolidone; and amide solvents such as N,N-dimethylformamide, and alcohol solvents are preferable.

Preferably, the aqueous medium contains water. The content of the water in the aqueous medium is preferably 50% by mass or more, more preferably 70% by mass or more, further preferably 80% by mass or more, and particularly preferably 90% by mass or more and the upper limit is 100% by mass. The aqueous medium is preferably water or solvent mixtures of water and hydrophilic solvents, and water is more preferable.

The content of the aqueous medium in the resin composition is preferably 30% by mass or more and further preferably 40% by mass or more and preferably 80% by mass or less and more preferably 70% by mass or less.

As the situation demands, the resin composition may further contain various additives such as cross-linking agents, surfactants, plasticizers, antistatic agents, waxes, light stabilizers, fluidization adjusters, dyes, leveling agents, rheology controlling agents, ultraviolet absorbers, antioxidants, photocatalytic compounds, inorganic pigments, organic pigments, and extender pigments.

The content of the additive relative to 100 parts by mass of the organic polymer is preferably 20 parts by mass or less, more preferably 10 parts by mass or less, and further preferably 5 parts by mass or less.

An article including a base material and a coating film that is a cured material of the resin composition is defined in appended claim 4.

The thickness of the coating film is preferably 0.1 µm or more, more preferably 0.3 µm or more, and further preferably 0.5 µm or more and preferably 100 µm or less, more preferably 50 µm or less, and further preferably 10 µm or less.

Examples of the base material include metals, plastics and films thereof, glass, wood, and lumber.

Examples of the metals include galvanized steel sheets and aluminum-galvanized steel sheets which are used for applications such as automobiles, home electric appliances, and building members, aluminum plates, aluminum alloy plates, chromate-phosphate-processed aluminum plates, electromagnetic steel sheets, copper plates, and stainless steel sheets.

Examples of the plastic base materials which are materials generally adopted for plastic formed products of agricultural films, cellular phones, home electric appliances, automobile interior and exterior materials, OA equipment include polyester resins, acrylonitrile-butadienestyrene resins (ABS resins), polycarbonate resins (PC resins), ABS/PC resins, polystyrene resins (PS resins), polymethylmethacrylate resins (PMMA resins), acrylic resins, polypropylene resins, polyethylene resins, and ethylenevinyl acetate copolymer resins (EVA resins). Regarding the plastic film base material, polyethylene terephthalate films, polyester films, polyethylene films, polypropylene films, TAC (triacetyl cellulose) films, polycarbonate films, and polyvinyl chloride films may be used.

Examples of the article include building members, home electric appliances, automobile components, and automobile exterior materials. The resin composition according to the present invention may be favorably used for various industrial applications such as building members, home electric appliances, automobile components, automobile exterior materials, coating agents, adhesives, and medical instruments.

### EXAMPLES

The present invention will be more specifically described below with reference to the examples.

### EXAMPLE 1

A urethane prepolymer having a cyclic carbonate group at a molecular terminal was obtained by reacting 475 parts by mass of polytetramethylene glycol (PTMG) (average molecular weight of 1,000), 31 parts by mass of ethylene glycol, and 222 parts by mass of isophorone diisocyanate in a reaction container and, thereafter, reacting 124 parts by mass of a compound denoted by the following formula at 100°C.

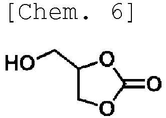

Subsequently, Hydroxyurethane composition (1) was obtained by cooling the reaction solution to 80°C and performing a reaction with 58 parts by mass of hexamethylenediamine in an ethanol solvent. The amount of hydroxy groups contained in Hydroxyurethane composition (1) was 61 mgKOH/g.

### EXAMPLE 2

A urethane prepolymer having a cyclic carbonate group at a molecular terminal was obtained by reacting 475 parts by mass of PTMG (average molecular weight of 1,000), 59 parts by mass of hexamethylene glycol, and 188 parts by mass of xylylene diisocyanate in a reaction container and, thereafter, reacting 124 parts by mass of a compound denoted by the following formula at 100°C.

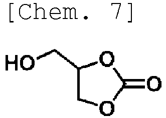

Subsequently, Hydroxyurethane composition (1) was obtained by cooling the reaction solution to 80°C and performing a reaction with 68 parts by mass of xylylenediamine in an N-methylpyrrolidone solvent. The amount of hydroxy groups contained in Hydroxyurethane composition (1) was 61 mgKOH/g.

### EXAMPLE 3

A urethane prepolymer having a cyclic carbonate group at a molecular terminal was obtained by reacting 451 parts by mass of polyester polyol (polyol synthesized by reacting ethylene glycol/neopentyl glycol/terephthalic acid/isophthalic acid: average molecular weight of 950), 31 parts by mass of ethylene glycol, and 188 parts by mass of xylylene diisocyanate in a reaction container and, thereafter, reacting 124 parts by mass of a compound denoted by the following formula at 100°C.

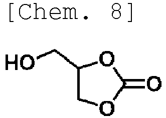

Subsequently, Hydroxyurethane composition (3) was obtained by cooling the reaction solution to 80°C and performing a reaction with 30 parts by mass of ethylenediamine in an ethanol solvent. The amount of hydroxy groups contained in Hydroxyurethane composition (3) was 68 mgKOH/g.

### EXAMPLE 4

A urethane prepolymer having a cyclic carbonate group at a molecular terminal was obtained by reacting 950 parts by mass of polycarbonate polyol ("UH-200" produced by UBE INDUSTRIES, LTD., hydroxyl value of 56 ± 5 mgKOH/g, and average molecular weight of 2,000), 59 parts by mass of hexamethylene glycol, and 188 parts by mass of xylylene diisocyanate in a reaction container and, thereafter, reacting 124 parts by mass of a compound denoted by the following formula at 100°C.

Subsequently, Hydroxyurethane composition (4) was obtained by cooling the reaction solution to 80°C and performing a reaction with 68 parts by mass of xylylenediamine in an ethanol solvent. The amount of hydroxy groups contained in Hydroxyurethane composition (3) was 40 mgKOH/g.

### EXAMPLE 5

A urethane prepolymer having a cyclic carbonate group at a molecular terminal was obtained by reacting 950 parts by mass of polycarbonate polyol ("UH-200" produced by UBE INDUSTRIES, LTD., hydroxyl value of 56 ± 5 mgKOH/g, and average molecular weight of 2,000), 59 parts by mass of hexamethylene glycol, and 188 parts by mass of xylylene diisocyanate in a reaction container and, thereafter, reacting 124 parts by mass of a compound denoted by the following formula at 100°C.

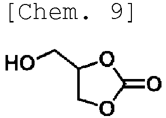

Subsequently, Hydroxyurethane composition (5) was obtained by cooling the reaction solution to 80°C and performing a reaction with 1,000 parts by mass of polyoxyalkylenediamine ("JEFFAMINE D-2000" produced by HUNTSMAN) in an ethanol solvent. The amount of hydroxy groups contained in Hydroxyurethane composition (3) was 24 mgKOH/g.

### EXAMPLE 6

A urethane prepolymer having a cyclic carbonate group at a molecular terminal was obtained by reacting 21 parts by mass of PTMG (average molecular weight of 850), 8 parts by mass of ethylene glycol, and 118 parts by mass of xylylene diisocyanate in a reaction container and, thereafter, reacting 124 parts by mass of a compound denoted by the following formula at 100°C.

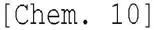

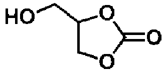

Subsequently, Hydroxyurethane composition (5) was obtained by cooling the reaction solution to 80°C and performing a reaction with 68 parts by mass of xylylenediamine in an ethanol solvent. The amount of hydroxy groups contained in Hydroxyurethane composition (3) was 155 mgKOH/g.

### EXAMPLE 7 (does not fall within the scope of the invention)

A urethane prepolymer having a cyclic carbonate group at a molecular terminal was obtained by reacting 124 parts by mass of a compound denoted by the following formula and 94 parts by mass of xylylene diisocyanate at 50°C in a reaction container.

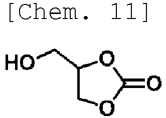

Subsequently, Hydroxyurethane composition (5) was obtained by cooling the reaction solution to 80°C and performing a reaction with 68 parts by mass of xylylenediamine in an isopropanol solvent. The amount of hydroxy groups contained in Hydroxyurethane composition (3) was 195 mgKOH/g.

### COMPARATIVE EXAMPLE 1

A urethane prepolymer was obtained by reacting 475 parts by mass of a polyester polyol ("P-1010" produced by Kuraray Co., Ltd., and 168 parts by mass of hexamethylene diisocyanate in a reaction container and, thereafter, reacting 124 parts by mass of a compound denoted by the following formula at 100°C.

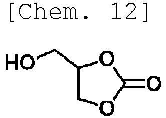

Subsequently, Hydroxyurethane composition (X1) was obtained by cooling the reaction solution to 80°C, adding 214 parts by mass of a compound obtained through a reaction of bisphenol A diglycidyl ether and CO₂, further adding 118 parts by mass of hexamethylenediamine, and performing a reaction in an ethanol solvent. The amount of hydroxy groups in a polymer contained in Hydroxyurethane composition (X1) was 131 mgKOH/g.

### [Method for evaluating resistance to peeling]

A coating film (primer layer) was formed on the surface of a base material by coating the surface of the base material with a hydroxyurethane composition obtained in the example or the comparative example such that the film thickness after drying was set to be about 1 µm and by performing heating at 150°C for 5 minutes. A 24-mm-wide adhesive tape produced by Nichiban Co., Ltd., was attached to the surface of the primer layer of the test plate produced by using the above-described method. Subsequently, the surface state of the coating film was visually evaluated, in accordance with the following evaluation criteria, by pulling the adhesive tape in the direction perpendicular to the coating film to peel off the adhesive tape from the coating film.
⊙: The coating film was not peeled off the surface of the base material constituting the test plate at all.
○: A very small part of the coating film was peeled off the surface of the base material constituting the test plate, where the extent of peeling was less than 10% of the entire area of the film constituting the test plate.
Δ: The primer layer in the range of 10% or more and less than 50% of the area of the coating film constituting the test plate was peeled off the surface of the base material constituting the test plate.
×: The primer layer in the range of 50% or more of the entire area of the coating film constituting the test plate was peeled off the surface of the base material constituting the test plate.

**[Table 1]**

| | Example | | | | | | | Comparative example |
|---|---|---|---|---|---|---|---|---|
| | 1 | 2 | 3 | 4 | 5 | 6 | 7# | 1 |
| Adhesiveness | ⊙ | ⊙ | ⊙ | ⊙ | ⊙ | ⊙ | ⊙ | × |

| | | | | | | | | |
|---|---|---|---|---|---|---|---|---|
| # Does not fall within the scope of the present invention | | | | | | | | |

Examples 1 to 6 are examples of the present invention, and the resistance to peeling from the metal base material was favorable. Comparative example 1 is an example in which a low-molecular-weight polyol was not included as the polyol that formed the urethane prepolymer, and the resistance to peeling from the metal base material was insufficient.

## Claims

1. An organic polymer that is a reaction product of Reaction product (I) of Urethane prepolymer (A) having an isocyanate group and Compound (B) denoted by Formula (1) and Polyamine compound (II),
wherein Urethane prepolymer (A) is a reaction product of Polyol (a1) and Polyisocyanate (a2), and
Polyol (a1) contains High-molecular-weight polyol (a1-1) and Low-molecular-weight polyol (a1-2), 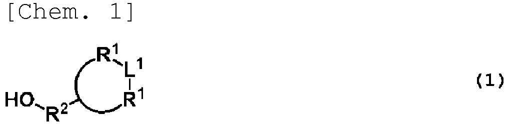 wherein in Formula (1),
each R¹ represents a single bond or a hydrocarbon group having a carbon atom number of 1 to 10,
R² represents a hydrocarbon group having a carbon atom number of 1 to 50 where -CH₂- contained in the hydrocarbon group is replaced or not replaced by -O-, and
L¹ represents -O-CO-O-, **characterized in that** the molecular weight of the High-molecular-weight polyol is 500 or more, and the molecular weight of the Low-molecular-weight polyol is 300 or less, the molecular weight being determined according to the method identified in the specification, and
**in that** the content of alkylenediol in the Low-molecular-weight polyol (a1-2) is 60% by mass or more and 100% by mass or less.

2. The organic polymer according to Claim 1, wherein the content of the low-molecular-weight polyol in the polyol is 0.1% by mass or more.

3. A resin composition comprising the organic polymer according to any one of Claims 1 or 2 and an aqueous medium.

4. An article comprising a base material and a coating film that is a cured material of the resin composition according to Claim 3.

## Patentansprüche

1. Organisches Polymer, bei dem es sich um ein Produkt einer Umsetzung eines Reaktionsprodukts (I) eines eine Isocyanatgruppe aufweisenden Urethan-Präpolymers (A) und einer durch Formel (1) bezeichneten Verbindung (B) mit einer Polyaminverbindung (II) handelt,
wobei das Urethan-Präpolymer (A) ein Reaktionsprodukt eines Polyols (a1) und eines Polyisocyanats (a2) ist, und
Polyol (a1) ein Polyol (a1-1) mit hohem Molekulargewicht und ein Polyol (a1-2) mit niedrigem Molekulargewicht enthält, 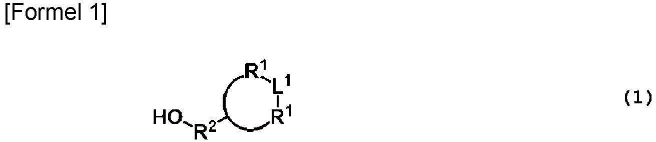
wobei in Formel (1)
jedes R¹ für eine Einfachbindung oder eine Kohlenwasserstoffgruppe mit einer Kohlenstoffatomanzahl von 1 bis 10 steht,
R² für eine Kohlenwasserstoffgruppe mit einer Kohlenstoffatomanzahl von 1 bis 50 steht, wobei -CH₂- in der Kohlenwasserstoffgruppe durch -O- ersetzt oder nicht ersetzt ist und
L¹ für -O-CO-O- steht,
**dadurch gekennzeichnet, dass**
das Molekulargewicht des Polyols mit hohem Molekulargewicht 500 oder mehr beträgt und das Molekulargewicht des Polyols mit niedrigem Molekulargewicht 300 oder weniger beträgt, wobei das Molekulargewicht gemäß dem in der Beschreibung angegebenen Verfahren bestimmt wird, und
**dadurch gekennzeichnet, dass** der Gehalt von Alkylendiol in dem Polyol (a1-2) mit niedrigem Molekulargewicht 60 Gew.-% oder mehr und 100 Gew.-% oder weniger beträgt.

2. Organisches Polymer gemäß Anspruch 1, wobei der Gehalt des Polyols mit niedrigem Molekulargewicht in dem Polyol 0,1 Gew.-% oder mehr beträgt.

3. Harzzusammensetzung, die das organische Polymer gemäß einem der Ansprüche 1 oder 2 und ein wässriges Medium umfasst.

4. Artikel, der ein Basismaterial und einen Beschichtungsfilm, bei dem es sich um ein gehärtetes Material der Harzzusammensetzung gemäß Anspruch 3 handelt, umfasst.

## Revendications

1. Polymère organique qui est un produit de réaction du produit de réaction (I) d'un prépolymère d'uréthane (A) ayant un groupe isocyanate et d'un composé (B) représenté par la formule (1) avec un composé polyamine (II),
dans lequel
le prépolymère d'uréthane (A) est un produit de réaction du polyol (a1) et du polyisocyanate (a2), et
le polyol (a1) contient un polyol de haut poids moléculaire (a1-1) et un polyol de faible poids moléculaire (a1-2), 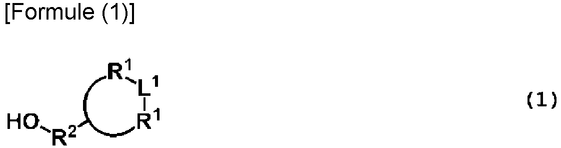
dans laquelle, dans la formule (1),
chaque R¹ représente une simple liaison ou un groupe hydrocarbure ayant un nombre d'atomes de carbone de 1 à 10,
R² représente un groupe hydrocarbure ayant un nombre d'atomes de carbone de 1 à 50, où -CH₂- contenu dans le groupe hydrocarbure est remplacé ou non par -O-, et
L1 représente -O-CO-O-,
characterise en ce que
le poids moléculaire du polyol de haut poids moléculaire est de 500 ou plus, et le poids moléculaire du polyol de faible poids moléculaire est de 300 ou moins, le poids moléculaire étant déterminé selon la méthode indiquée dans la description, et
en ce que la teneur en alkylènediol dans le polyol de faible poids moléculaire (a1-2) est de 60 % en masse ou plus et de 100 % en masse ou moins.

2. Polymère organique selon la revendication 1, dans lequel la teneur en polyol de faible poids moléculaire dans le polyol est de 0,1 % en masse ou plus.

3. Composition de résine comprenant le polymère organique selon l'une quelconque des revendications 1 ou 2 et un milieu aqueux.

4. Article comprenant un matériau de base et un film de revêtement qui est un matériau durci de la composition de résine selon la revendication 3.
